# EUROPEAN PATENT SPECIFICATION

(11) **EP 2 298 502 B1**
(45) Date of publication and mention of the grant of the patent: **26.06.2019**
(21) Application number: 10382249.0
(22) Date of filing: 20.09.2010
(51) Int. Cl.: B25C 1/18, F16B 19/14, F16L 3/04

(54) **Base plate for flanging conduits**
Bodenplatte für Bördeln von Leitungen
Plaque de base pour le bridage des conduits

(30) Priority: 21.09.2009 ES 200901339 U
(43) Date of publication of application: 23.03.2011
(73) Proprietor: Unex Aparellaje Electrico S.L., 08903 L'Hospitalet de Llobregat (Barcelona) (ES)
(72) Inventor: Mostazo Oviedo, José Antonio, 08940 Cornellà de Llobregat (ES)
(74) Representative: Curell Suñol S.L.P.

(56) References cited:
- EP-A1- 1 103 750
- EP-A1- 1 842 626
- WO-A1-00/32949

## Description

### Field of the Invention

The present relates to a base plate for flanging conduits, specifically a small-sized base plate, as appropriate, made of synthetic plastic material, which can be considered as universally applicable since it has the suitable organization to allow being fixed to determined types of wall faces by means of using any of the automatic nailing means existing on the market, such as nail guns.

### State of the Art

Clamps are known which have a base formed by a rectangular platform provided with a nailed or screwed central hole and which is integral with a main body of the clamp, such as the case of the clamp disclosed in document ES1060915U. Although means for fastening to a nail gun are not provided, this clamp can be fixed by means of such tool, but in this case the operator must use both hands, whereby the handling of the nail gun is affected.

Document ES2205904T3 discloses an accessory for fixing by means of flanges any article to a support which is provided with fitting lips, to fit into said accessory, which are complementary to a groove which the barrel of the nail gun must have, whereby said accessory can only be used correctly with a specific type of nail gun.

Generally, the normal use of each of the nail gun models existing on the market is especially linked to a determined fixing accessory model. None of the existing nail gun models can be used in fixing accessories provided for the remaining models on the market.

The situation set forth above proves the lack of a universal type fixing accessory which can be used with any of the nail guns existing on the market.

EP1842626A1 discloses a base plate configured to be fixed to a surface by means of a nail gun. The base plate is provided with a groove which crosses it in a direction perpendicular to the longitudinal axis of the mouth of the gun. A fixation element is provided to fix an object, like a pipe or a cable, to the base plate. The fixation element engages the base plate, a portion of said fixation element being housed inside the groove so that said base plate and said portion of the fixation element are crossed by a nail shot from the gun.

EP1103750A1 discloses a base plate configured to be fixed to a surface by means of a nail gun, said base plate comprising a cradle to hold a tube and an elastic clamp for fixing the tube. The elastic clamp is integral with the base plate.

### Summary of the Invention

For the purpose of making a fixing accessory be considered as universal, the solution of creating a fixing accessory which simultaneously includes coupling means for coupling to the muzzles of the usual nail guns on the market has been adopted.

According to the previous solution, a base plate for flanging conduits has been developed according to claim 1. The base plate is made of synthetic plastic material and suitable for being fixed to a wall face by means of using a nail gun, characterized in that it is formed by a hollow body adopting the configuration of a truncated square pyramid with an open upper smaller base, a lower larger base and side faces forming a mixed surface, said hollow body comprising, on one hand, inner coupling means for coupling to a nail gun which comprise central fitting means for fitting inside the muzzle of a nail gun, tangential fitting means for fitting with perimetric points of the muzzle of a nail gun, which are equidistant from said central fitting means, and friction fitting means for fitting with two flaps of a nail gun parallel to one another, which are located on two opposite sides of said hollow body, said hollow body comprising, on the other hand, outer positioning means for positioning said hollow body with respect to a location line thereof, seating and consolidating means for seating and consolidating conduits in said hollow body and threading means in order to thread clamps in said hollow body.

Preferably, some of said inner coupling means for coupling to the muzzle of a nail gun are formed by a central tubular appendage emerging centrally from the inner face of said lower larger base of the hollow body and provided with outer radial tabs intended to fit inside said muzzle of the nail gun.

Preferably, others of said inner coupling means for coupling to the muzzle of a nail gun are formed by fitting tabs which are parallel to one another in twos and individually to each of the sides of said lower larger base of the hollow body and equidistant from said central tubular appendage of said inner coupling means, said fitting tabs fitting tangentially in perimetric points of said muzzle of a nail gun.

Preferably, the retention carried out by said fitting tabs by means of tangentially pressing on points of the outer periphery of the muzzle of a nail gun is complemented by means of some of said outer radial tabs of the central tubular appendage which have a lower radial extension of less height than said outer radial tabs and which serve as a support at their ends for points of the inner periphery of said muzzle.

Preferably, some of said inner coupling means for coupling to the muzzle of a nail gun are formed by friction fitting means intended to cooperate with two rectangular flaps belonging to said nail gun which are parallel to one another and which have trapezoidal free ends, said friction fitting means being configured by two pairs of opposite inner sides of said hollow body, said inner sides forming a square prismatic wall which, with the inner face of said lower larger base of the hollow body, configures virtual concave trihedrons which are occupied by reliefs in the form of a quarter of a square pyramid with a height equal to that of said square prismatic wall, said reliefs configuring inclined seating sides for the inclined sides of said trapezoidal free ends of said flaps of the nail gun.

Preferably, the side faces of said hollow body have a mixed surface which is longitudinally distinguished in a curved convex upper area, having in a straight section an arched shape with an upper end impinging on said open upper smaller base of the hollow body and the other end impinging on the sides of said upper larger base of the hollow body, and in a lower area which is perpendicular to said lower larger base of the hollow body and which has its surface distinguished in two identical concave end surfaces flanking a central convex surface.

Preferably, said outer positioning means for positioning said hollow body with respect to a location line thereof are formed by a series of vertical ribs centrally located on said central convex surface of the lower areas of the side faces of the hollow body.

Said seating and consolidating means for anchoring and consolidating conduits in said hollow body are formed by a concave arched configuration at the end of the upper area of the side faces of the hollow body impinging on said open upper smaller base of said hollow body, said concave arched configuration having nonslip reliefs.

Said threading means in order to thread clamps in said hollow body are arranged on each of the side faces of said hollow body and are formed by open grooves centrally arranged in the upper area of said side faces of the hollow body.

The level of said open grooves is preferably equal to the height of said fitting tabs, such that a double guiding support for inserting clamps is conferred.

### Brief Description of the Drawings

To facilitate the understanding of the ideas set forth, disclosing at the same time various constructive details, an embodiment of the present invention is described below, making reference to the drawings attached to the description which, given their essentially illustrative purpose, must be interpreted as not limiting the scope of the legal protection which is sought. In the drawings:
Figure 1 is a top perspective view of a base plate for flanging conduits according to the invention which acts as a fixing accessory.
Figure 2 is a side elevational view of the base plate of Figure 1.
Figure 3 is a top plan view of the base plate of Figure 1.
Figure 4 is a bottom plan view of the base plate of Figure 1.
Figure 5 is a sectional view according to line V - V of Figure 3.
Figure 6 is a sectional view according to line VI - VI of Figure 3.
Figure 7 schematically depicts, in an elevational view, the arrangement of a nail gun in the central fitting means of the base plate according to the invention.
Figure 8 schematically depicts a top plan view of the arrangement of Figure 7.
Figure 9 schematically depicts an elevational view of the arrangement of a nail gun in the tangential fitting means of the base plate according to the invention.
Figure 10 schematically depicts a top plan view of the arrangement of Figure 9.
Figure 11 schematically depicts an elevational view of the configuration of one of the inner faces of the inner prismatic wall of the hollow body of the base plate according to the invention, the faces of which form the friction fitting means for the nail gun.
Figure 12 schematically depicts a top plan view of the configuration of Figure 11.
Figure 13 schematically depicts an elevational view of the arrangement of the coupling means for coupling a nail gun in the friction fitting means of the base plate of the invention.
Figure 14 schematically depicts an elevational view, in an orthogonal position with respect to that of Figure 13, of the arrangement of said Figure 13.
Figure 15 schematically depicts a top plan view of the arrangement of Figure 13.

### Detailed Description of an Embodiment of the Invention

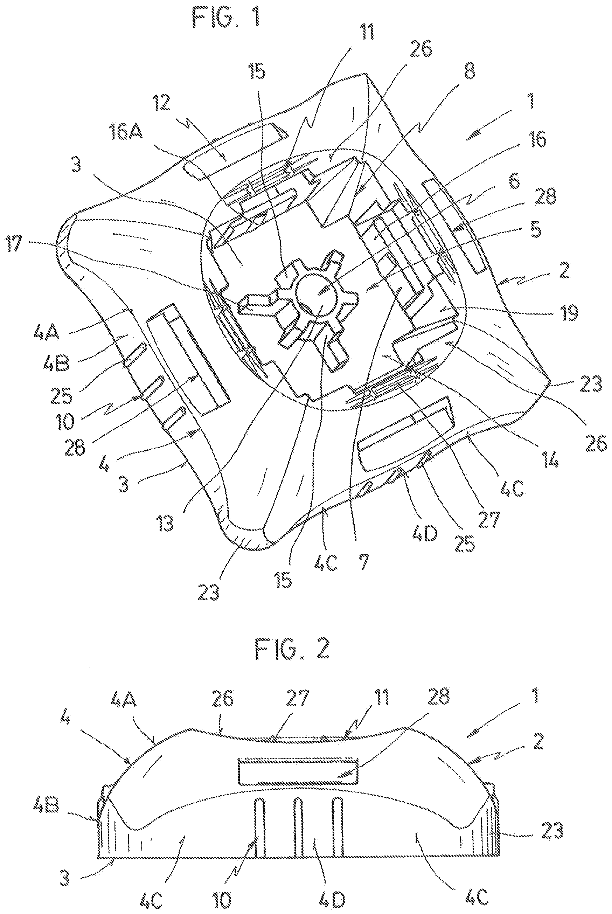

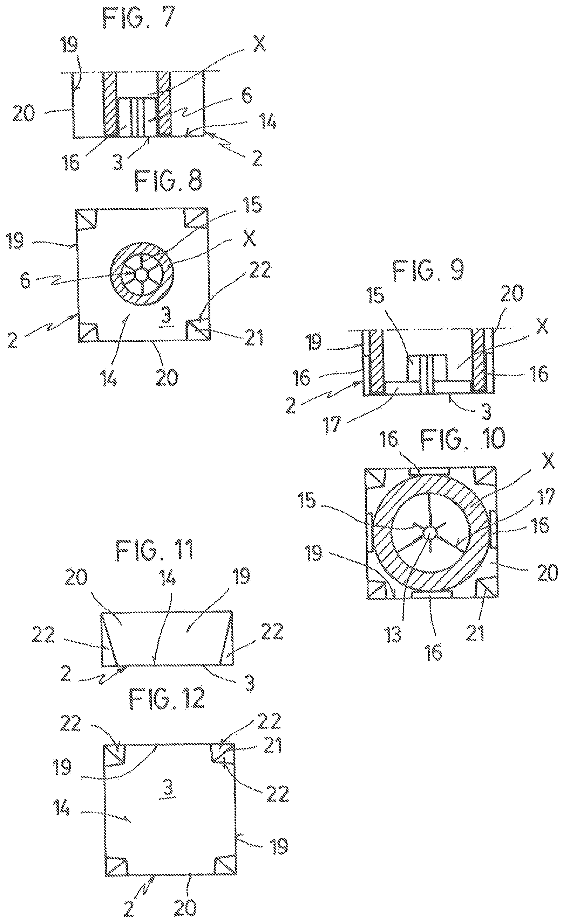

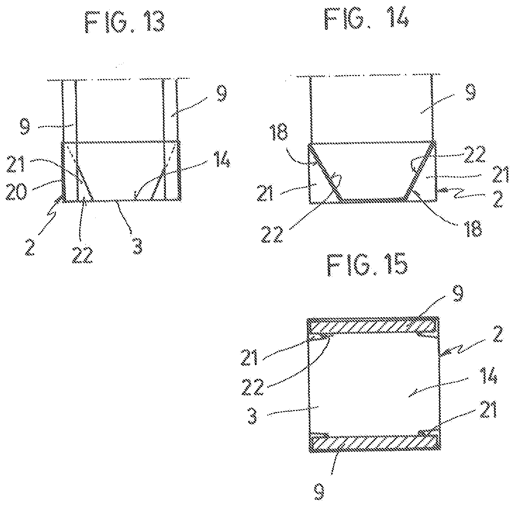

Figure 1 shows a preferred embodiment of the base plate 1 for flanging conduits object of the invention, which is formed by a hollow body 2 adopting the substantial configuration of a truncated pyramid having a substantially square lower larger base 3, side faces 4 with a mixed surface and an open upper smaller base 5. The base plate 1 is provided, on one hand, with inner coupling means for coupling to a nail gun, which are distinguished in: central fitting means 6 for fitting inside the muzzle X of a nail gun (see Figures 7 and 8); tangential fitting means 7 for fitting with perimetric points of the muzzle X of a nail gun, said tangential fitting means being equidistant from said central fitting means 6 (see Figures 9 and 10); and friction fitting means 8 for fitting in two flaps 9 parallel to one another and to the muzzle X of a nail gun, said friction fitting means 8 being located on two opposite sides of the hollow body 2 (see Figures 13, 14 and 15). On the other hand, the base plate 1 is provided with outer positioning means 10 for positioning the hollow body 2 with respect to a location line thereof, seating and consolidating means 11 for seating and consolidating conduits in the hollow body 2 and threading means 12 in order to thread clamps in said hollow body 2.

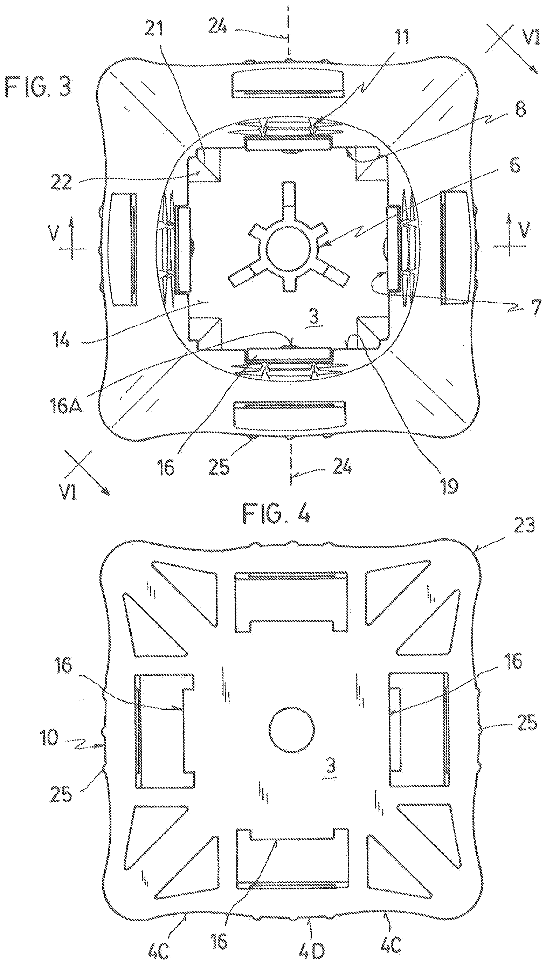

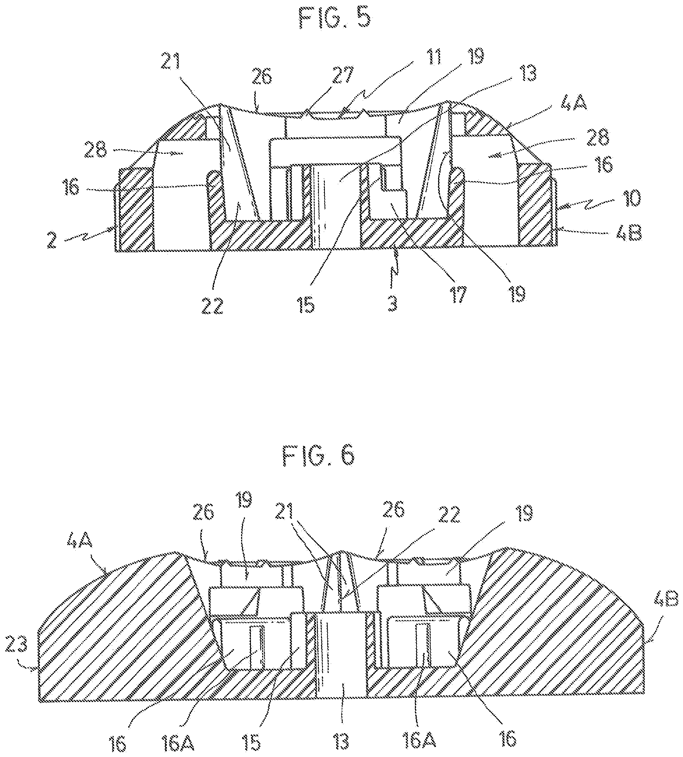

Figures 1, 3, 4 and 5 show an embodiment of the central fitting means 6, formed by a central tubular appendage 13 emerging from the inner face 14 of the lower larger base 3 of the hollow body 2 and provided with outer radial tabs 15 intended for the fitting thereof inside the muzzle X of a nail gun, as schematically illustrated in Figure 7.

The same figures illustrate an embodiment of the tangential fitting means 7, which are formed by fitting tabs 16 which are parallel to one another in twos and individually to each of the sides of the square lower larger base 3 of the hollow body 2 and equidistant from the central tubular appendage 13. The fitting tabs 16 tangentially fit in perimetric points of the muzzle X of a nail gun by means of a protrusion 16A.

The tangential fitting means 7 can be complemented by means of a lower radial extension 17 provided in some of the outer radial tabs 15 of the central tubular appendage 13. Said lower radial extensions 17 are of less height than the outer radial tabs 15 and serve as support, at their ends, for points of the inner periphery of the muzzle X of a nail gun.

Figures 1, 3, 5 and 6 show a preferred embodiment of the friction fitting means 8 intended to cooperate (see Figures 13, 14 and 15) with two rectangular flaps 9 parallel to one another and having trapezoidal free ends 18, belonging to a nail gun. Said friction fitting means 8 are configured by two pairs of inner sides 19 arranged in an opposite manner in the hollow body 2, forming a square prismatic wall 20. The virtual concave trihedrons (not depicted) in the lower corners, formed by said square prismatic wall 20 and the inner face 14 of the larger base 3 of the hollow body 2, are occupied by reliefs 21 which have the shape of a quarter of a square pyramid with a height equal to that of said square prismatic wall 20 and which configure inclined seating sides 22 for seating the inclined sides of said trapezoidal free ends 18 of the flaps 9 of the nail gun between which the muzzle X is located.

In the figures it is verified that the side faces 4 of the hollow body 2 have a mixed surface which is longitudinally distinguished in a curved convex upper area 4A having, in a straight section, an arched shape with an upper end impinging on the open upper smaller base 5 of the hollow body 2 and the other end impinging on the sides 23 of the larger base 3 of the hollow body 2, and in a lower area 4B which is perpendicular to the larger base 3 of the hollow body 2 and which has its surface distinguished in two identical concave end surfaces 4C flanking a central convex surface 4D.

The outer positioning means 10 for positioning the hollow body 2 with respect to a location line 24 thereof are formed by a series of vertical ribs 25 centrally located in the central convex surface 4D of the lower area 4B in the side faces 4 of the hollow body 2.

The seating and consolidating means 11 for seating and consolidating conduits in the hollow body 2 are formed by a concave arched configuration 26, at the end of said upper area 4A of the side faces 4 of the hollow body 2 impinging on the open upper smaller base 5, which has nonslip reliefs 27.

The outer threading means 12 in order to thread clamps in the hollow body 2 are arranged on each of the side faces 4 thereof and are formed by open grooves 28 centrally arranged in said upper area 4A of the side faces 4 of the hollow body 2, such that the level of said open grooves 28 is equal to the height of the tangential fitting tabs 16 for fitting the hollow body 2 in the muzzle of a nail gun, for the purpose of conferring a double rectilinear guiding support in the threading of the clamps.

For the purpose of making the previous description easier to understand, the schematic drawings corresponding to Figures 7 to 15 have been made, in which, where appropriate, the central fitting means 6, the tangential fitting means 7 and the friction fitting means 8 appear.

Figure 7 schematically depicts, in an elevational view, the arrangement of the muzzle X of a nail gun coupled to the central fitting means 6 of the base plate 1 formed by the central tubular appendage 13 and the outer radial tabs 15. The figure also shows the opposite inner sides 19 of the prismatic wall 20 and the inner face 14 of the square larger base 3 of the hollow body 2. It is observed how the muzzle X of the nail gun fits in the outer radial tabs 15.

Figure 8 shows the arrangement of the elements of Figure 7 seen in a top plan view. It is observed in the figures that the outer radial tabs 15 lack the lower radial extensions 17 and that Figure 8 shows the inner corner reliefs 21 formed by quarters of a pyramid, which do not carry out any function in this case.

Figure 9 schematically depicts, in an elevational view, the arrangement of the muzzle X of a nail gun coupled to the tangential fitting means 7 of the base plate 1, formed by the fitting tabs 16 which are tangent to the muzzle X and which are optionally complemented by the outer radial tabs 17 which impinge on the inner surface of said muzzle X at some points.

Figure 10 shows the arrangement of the elements of Figure 9 seen according to a top plan view, without the outer radial tabs 15 or the reliefs 21 in the form of quarters of a pyramid interfering in the fitting.

Figure 11 schematically depicts, in an elevational view, the configuration of one of the inner sides 19 of the inner prismatic wall 20 of the hollow body 2 of the base plate 1, which form the friction fitting means 8.

Figure 12 depicts the elements of Figure 11 seen in a top plan view, emphasizing the central space of the hollow body 2 of the base plate 1 which is delimited by the prismatic wall 20, the inner sides 19 of which form the friction fitting means 8 for the flaps 9 of the nail gun.

Figure 13 schematically depicts, in an elevational view, the arrangement of the coupling means formed by the two flaps 9 of the head of a nail gun in the friction fitting means 8 formed by the inner side 19 of the prismatic wall 20 and the inclined side 22 of the reliefs 21 in the inner corners of the hollow body 2 of the base plate 1.

Figure 14 depicts, also in an elevational view, in an orthogonal position with respect to the position of Figure 13, the arrangement of the coupling means for coupling a nail gun in the friction fitting means 8 of the hollow body 2 of the base plate 1.

Finally, Figure 15 depicts a top plan view of the arrangement depicted in Figures 13 and 14 of the coupling means for coupling a nail gun in the friction fitting means 8 of the hollow body 2 of the base plate 1.

## Claims

1. A base plate for flanging conduits, said base plate (1) being made of synthetic plastic material and suitable for being fixed to a wall face by means of using a nail gun, said base plate being formed by a hollow body (2), said hollow body (2) comprising, on one hand, inner coupling means for coupling to a nail gun which comprise central fitting means (6) for fitting inside the muzzle of a nail gun, tangential fitting means (7) for fitting with perimetric points of the muzzle of a nail gun, which are equidistant from said central fitting means (6), and friction fitting means (8) for fitting with two flaps (9) of a nail gun parallel to one another, which are located on two opposite sides of said hollow body (2), said hollow body (2) comprising, on the other hand, outer positioning means (10) for positioning said hollow body (2) with respect to a location line (24) thereof and seating and consolidating means (11) for seating and consolidating conduits in said hollow body (2), **characterized in that** said hollow body (2) has the configuration of a truncated square pyramid with an open upper smaller base (5), a lower larger base (3) and four side faces (4) forming a mixed surface, and **in that**:
- said seating and consolidating means (11) for seating and consolidating conduits in said hollow body (2) are formed by a concave arched configuration (26) at the end of the upper area of each of said side faces (4) of the hollow body (2) impinging on said open upper smaller base (5) of said hollow body (2), said concave arched configuration (26) having nonslip reliefs (27);
- said hollow body (2) comprises threading means (12) in order to thread clamps in said hollow body (2), said threading means (12) being arranged on each of said four side faces (4) of the hollow body (2) and being formed by open grooves (28) centrally arranged in the upper area of said side faces (4) of the hollow body (2).

2. The base plate for flanging conduits according to claim 1, **characterized in that** some of said inner coupling means for coupling to the muzzle of a nail gun are formed by a central tubular appendage (13) emerging centrally from the inner face (14) of said lower larger base (3) of the hollow body (2) and provided with outer radial tabs (15) intended to fit inside said muzzle of the nail gun.

3. The base plate for flanging conduits according to claim 2, **characterized in that** others of said inner coupling means for coupling to the muzzle of a nail gun are formed by fitting tabs (16) which are parallel to one another in twos and individually to each of the sides of said lower larger base (3) of the hollow body (2) and equidistant from said central tubular appendage (13) of said inner coupling means, said fitting tabs (16) fitting tangentially in perimetric points of said muzzle of a nail gun.

4. The base plate for flanging conduits according to claim 3, **characterized in that** the retention carried out by said fitting tabs (16), by means of tangentially pressing on points of the outer periphery of the muzzle of a nail gun, is complemented by means of some of said outer radial tabs (15) of the central tubular appendage (13) which have a lower radial extension (17) of less height than said outer radial tabs (15) and which serve as support at their ends for points of the inner periphery of said muzzle.

5. The base plate for flanging conduits according to any of claims 1 to 4, **characterized in that** some of said inner coupling means for coupling to the muzzle of a nail gun are formed by friction fitting means (8) intended to cooperate with two rectangular flaps (9) belonging to said nail gun which are parallel to one another and which have trapezoidal free ends, said friction fitting means (8) being configured by two pairs of opposite inner sides (19) of said hollow body (2), said inner sides (19) forming a square prismatic wall (20) which, with the inner face (14) of said lower larger base (3) of the hollow body (2), configures virtual concave trihedrons which are occupied by reliefs (21) in the form of a quarter of a square pyramid with a height equal to that of said square prismatic wall (20), said reliefs (21) configuring inclined seating sides (22) for the inclined sides of said trapezoidal free ends of said flaps (9) of the nail gun.

6. The base plate for flanging conduits according to any of claims 1 to 5, **characterized in that** the side faces (4) of said hollow body (2) have a mixed surface which is longitudinally distinguished in a curved convex upper area (4A), having in a straight section an arched shape with an upper end impinging on said open upper smaller base (5) of the hollow body (2) and the other end impinging on the sides (23) of said upper larger base (3) of the hollow body (2), and in a lower area (4B) which is perpendicular to said lower larger base (3) of the hollow body (2) and which has its surface distinguished in two identical concave end surfaces (4C) flanking a central convex surface (4D).

7. The base plate for flanging conduits according to claim 6, **characterized in that** said outer positioning means (10) for positioning said hollow body (2) with respect to a location line (24) thereof, are formed by a series of vertical ribs (25) centrally located on said central convex surface (4D) of the lower areas (4B) of the side faces (4) of the hollow body (2).

8. The base plate for flanging conduits according to claims 3 and 1, **characterized in that** the level of said open grooves (28) is equal to the height of said fitting tabs (16), such that a double guiding support for threading clamps is conferred.

## Patentansprüche

1. Grundplatte für das Anflanschen von Leitungen, wobei die Grundplatte (1) aus synthetischem Kunststoffmaterial hergestellt und dazu geeignet ist, an einer Wandfläche unter Verwendung einer Nagelpistole befestigt zu werden, wobei die Grundplatte durch einen Hohlkörper (2) gebildet ist, wobei der Hohlkörper (2) einerseits innere Verbindungsmittel zur Verbindung mit einer Nagelpistole aufweist, die zentrale Passmittel (6) zum Passen in die Mündung einer Nagelpistole aufweisen, tangentiale Passmittel (7) zum Zusammenpassen mit perimetrischen Punkten der Mündung einer Nagelpistole, die von den zentralen Passmitteln (6) gleich beabstandet sind, und Reibungspassmittel (8) zum Zusammenpassen mit zwei Klappen (9) einer Nagelpistole, die parallel zueinander sind und sich auf zwei gegenüberliegenden Seiten des Hohlkörpers (2) befinden, wobei der Hohlkörper (2) andererseits äußere Positionierungsmittel (10) zum Positionieren des Hohlkörpers (2) bezüglich einer Lagelinie (24) davon und Sitz- und Konsolidierungsmittel (11) zum Einsetzen und Konsolidieren von Leitungen in dem Hohlkörper (2) aufweist, **dadurch gekennzeichnet, dass** der Hohlkörper (2) die Konfiguration eines quadratischen Pyramidenstumpfs mit einer offenen oberen kleineren Basis (5), einer unteren größeren Basis (3) und vier Seitenflächen (4) hat, die eine Mischoberfläche bilden, und dass:
die Sitz- und Konsolidierungsmittel (11) zum Einsetzen und Konsolidieren von Leitungen in dem Hohlkörper (2) durch eine konkave gewölbte Konfiguration (26) am Ende des oberen Bereichs jeder der Seitenflächen (4) des Hohlkörpers (2) gebildet werden, die auf die offene untere kleinere Basis (5) des Hohlkörpers (2) auftreffen, wobei die konkave gewölbte Konfiguration (26) rutschfeste Vorsprünge (27) hat;
der Hohlkörper (2) Durchziehmittel (12) aufweist, um Halterungen in den Hohlkörper (2) durchzuziehen, wobei die Durchziehmittel (12) an jeder der vier Seitenflächen (4) des Hohlkörpers (2) angeordnet und durch offene Nuten (28) gebildet sind, die im oberen Bereich der Seitenflächen (4) des Hohlkörpers (2) zentral angeordnet sind.

2. Grundplatte für das Anflanschen von Leitungen nach Anspruch 1, **dadurch gekennzeichnet, dass** einige der inneren Verbindungsmittel zur Verbindung mit der Mündung einer Nagelpistole durch einen zentralen rohrförmigen Fortsatz (13) gebildet sind, der mittig aus der Innenfläche (14) der unteren größeren Basis (3) des Hohlkörpers (2) herausragt und mit äußeren radialen Laschen (15) versehen ist, die dazu vorgesehen sind, in die Mündung der Nagelpistole zu passen.

3. Grundplatte für das Anflanschen von Leitungen nach Anspruch 2, **dadurch gekennzeichnet, dass** andere der inneren Verbindungsmittel zur Verbindung mit der Mündung einer Nagelpistole durch Passlaschen (16) gebildet sind, die paarweise parallel zueinander und einzeln zu jeder der Seiten der unteren größeren Basis (3) des Hohlkörpers (2) sind und von dem zentralen rohrförmigen Fortsatz (13) der inneren Verbindungsmittel gleich beabstandet sind, wobei die Passlaschen (16) tangential in perimetrische Punkte der Mündung einer Nagelpistole passen.

4. Grundplatte für das Anflanschen von Leitungen nach Anspruch 3, **dadurch gekennzeichnet, dass** das durch die Passlaschen (16) erfolgte Festhalten mittels des tangentialen Drückens auf Punkte des Außenumfangs der Mündung einer Nagelpistole durch einige der äußeren radialen Laschen (15) des zentralen rohrförmigen Fortsatzes (13) ergänzt wird, die eine untere radiale Ausdehnung (17) von geringerer Höhe haben als die äußeren radialen Laschen (15), und die an ihren Enden als Stütze für Punkte des Innenumfangs der Mündung dienen.

5. Grundplatte für das Anflanschen von Leitungen nach einem der Ansprüche 1 bis 4, **dadurch gekennzeichnet, dass** einige der inneren Verbindungsmittel zur Verbindung mit der Mündung einer Nagelpistole durch Reibungspassmittel (8) gebildet sind, die dazu vorgesehen sind, mit zwei rechteckigen Klappen (9) zusammenzuwirken, die zu der Nagelpistole gehören und zueinander parallel sind, und die trapezförmige freie Enden haben, wobei die Reibungspassmittel (8) durch zwei Paare gegenüberliegender Innenseiten (19) des Hohlkörpers (2) konfiguriert sind, wobei die Innenseiten (19) eine quadratische prismatische Wand (20) bilden, die mit der Innenfläche (14) der unteren größeren Basis (3) des Hohlkörpers (2) virtuelle konkave Trieder konfiguriert, die von Vorsprünge (21) in Form eines Viertels einer quadratischen Pyramide mit einer Höhe, die gleich derjenigen der quadratischen prismatischen Wand (20) ist, belegt sind, wobei die Vorsprünge (21) geneigte Sitzseiten (22) für die geneigten Seiten der trapezförmigen freien Enden der Klappen (9) der Nagelpistole konfigurieren.

6. Grundplatte für das Anflanschen von Leitungen nach einem der Ansprüche 1 bis 5, **dadurch gekennzeichnet, dass** die Seitenflächen (4) des Hohlkörpers (2) eine Mischoberfläche haben, die in der Länge **gekennzeichnet ist durch** einen gebogenen konvexen oberen Bereich (4A), der in einem geraden Abschnitt eine Bogenform mit einem oberen Ende hat, das auf die offene obere kleinere Basis (5) des Hohlkörpers (2) auftrifft, und dem anderen Ende, das auf die Seiten (23) der oberen größeren Basis (3) des Hohlkörpers (2) auftrifft, und durch einen unteren Bereich (4B), der senkrecht zu der unteren größeren Basis (3) des Hohlkörpers (2) ist und dessen Oberfläche durch zwei identische konkave Endoberflächen (4C) gekennzeichnet ist, die eine zentrale konvexe Oberfläche (4D) flankieren.

7. Grundplatte für das Anflanschen von Leitungen nach Anspruch 6, **dadurch gekennzeichnet, dass** die äußeren Positionierungsmittel (10) zum Positionieren des Hohlkörpers (2) bezüglich einer Lagelinie (24) davon durch eine Reihe vertikaler Rippen (25) gebildet sind, die zentral auf der zentralen konvexen Oberfläche (4D) der unteren Bereiche (4B) der Seitenflächen (4) des Hohlkörpers (2) angeordnet sind.

8. Grundplatte für das Anflanschen von Leitungen nach Anspruch 3 und 1, **dadurch gekennzeichnet, dass** das Niveau der offenen Nuten (28) gleich der Höhe der Passlaschen (16) ist, so dass eine doppelte Führungsstütze zum Durchziehen von Halterungen gewährt wird.

## Revendications

1. Plaque de base pour le bridage de conduits, ladite plaque de base (1) étant constituée d'un matériau plastique synthétique et apte à être fixée à une face murale au moyen de l'utilisation d'un pistolet à clous, ladite plaque de base étant formée par un corps creux (2), ledit corps creux (2) comprenant, d'une part, des moyens de couplage intérieurs pour le couplage à un pistolet à clous qui comprennent des moyens d'ajustement centraux (6) pour l'ajustement à l'intérieur du canon d'un pistolet à clous, des moyens d'ajustement tangentiels (7) pour l'ajustement avec des points périmétriques du canon d'un pistolet à clous, qui sont équidistants desdits moyens d'ajustement centraux (6), et des moyens d'ajustement par friction (8) pour l'ajustement avec deux rabats (9) d'un pistolet à clous parallèles l'un à l'autre, qui sont situés sur deux côtés opposés dudit corps creux (2), ledit corps creux (2) comprenant, d'autre part, des moyens de positionnement extérieurs (10) pour le positionnement dudit corps creux (2) par rapport à une ligne d'emplacement (24) de celui-ci et des moyens d'assise et de consolidation (11) pour l'assise et la consolidation de conduits dans ledit corps creux (2), **caractérisée en ce que** ledit corps creux (2) a la configuration d'une pyramide carrée tronquée avec une plus petite base supérieure ouverte (5), une plus grande base (3) inférieure et quatre faces latérales (4) formant une surface mixte, et **en ce que** :
- lesdits moyens d'assise et de consolidation (11) pour l'assise et la consolidation de conduits dans ledit corps creux (2) sont formés par une configuration arquée concave (26) à l'extrémité de la zone supérieure de chacune desdites faces latérales (4) du corps creux (2) empiétant sur ladite plus petite base supérieure ouverte (5) dudit corps creux (2), ladite configuration arquée concave (26) comportant des reliefs antidérapants (27) ;
- ledit corps creux (2) comprend des moyens d'enfilage (12) pour enfiler des colliers de serrage dans ledit corps creux (2), lesdits moyens d'enfilage (12) étant agencés sur chacune desdites quatre faces latérales (4) du corps creux (2) et étant formés par des rainures ouvertes (28) agencées centralement dans la zone supérieure desdites faces latérales (4) du corps creux (2).

2. Plaque de base pour le bridage de conduits selon la revendication 1, **caractérisée en ce que** certains desdits moyens de couplage intérieurs pour le couplage au canon d'un pistolet à clous sont formés par un appendice tubulaire central (13) émergeant centralement de la face intérieure (14) de ladite plus grande base (3) inférieure du corps creux (2) et pourvus de pattes radiales extérieures (15) destinées à s'ajuster à l'intérieur dudit canon du pistolet à clous.

3. Plaque de base pour le bridage de conduits selon la revendication 2, **caractérisée en ce que** d'autres desdits moyens de couplage intérieurs pour le couplage au canon d'un pistolet à clous sont formés par des pattes d'ajustement (16) qui sont parallèles l'une à l'autre à deux et individuellement sur chacun des côtés de ladite plus grande base (3) inférieure du corps creux (2) et équidistantes dudit appendice tubulaire central (13) desdits moyens de couplage intérieurs, lesdites pattes d'ajustement (16) s'ajustant tangentiellement à des points périmétriques dudit canon d'un pistolet à clous.

4. Plaque de base pour le bridage de conduits selon la revendication 3, **caractérisée en ce que** la rétention effectuée par lesdites pattes d'ajustement (16), au moyen d'une pression tangentielle sur des points de la périphérie extérieure du canon d'un pistolet à clous, est complétée au moyen de certaines desdites pattes radiales extérieures (15) de l'appendice tubulaire central (13) qui ont une extension radiale inférieure (17) de hauteur inférieure à celle desdites pattes radiales extérieures (15) et qui servent de support à leurs extrémités pour des points de la périphérie intérieure dudit canon.

5. Plaque de base pour le bridage de conduits selon l'une quelconque des revendications 1 à 4, **caractérisée en ce que** certains desdits moyens de couplage intérieurs pour le couplage au canon d'un pistolet à clous sont formés par des moyens d'ajustement par friction (8) destinés à coopérer avec deux rabats (9) rectangulaires appartenant audit pistolet à clous qui sont parallèles l'un à l'autre et qui ont des extrémités libres trapézoïdales, lesdits moyens d'ajustement par friction (8) étant configurés par deux paires de côtés intérieurs (19) opposés dudit corps creux (2), lesdits côtés intérieurs (19) formant une paroi prismatique carrée (20) qui, avec la face intérieure (14) de ladite plus grande base (3) inférieure du corps creux (2), configure des trièdres concaves virtuels qui sont occupés par des reliefs (21) sous la forme d'un quart d'une pyramide carrée avec une hauteur égale à celle de ladite paroi prismatique carrée (20), lesdits reliefs (21) configurant des côtés d'assise inclinés (22) pour les côtés inclinés desdites extrémités libres trapézoïdales desdits rabats (9) du pistolet à clous.

6. Plaque de base pour le bridage de conduits selon l'une quelconque des revendications 1 à 5, **caractérisée en ce que** les faces latérales (4) dudit corps creux (2) ont une surface mixte qui est distinguée longitudinalement dans une zone supérieure convexe incurvée (4A), ayant, dans une coupe droite, une forme arquée avec une extrémité supérieure empiétant sur ladite plus petite base supérieure ouverte (5) du corps creux (2) et l'autre extrémité empiétant sur les côtés (23) de ladite plus grande base (3) supérieure du corps creux (2), et dans une zone inférieure (4B) qui est perpendiculaire à ladite plus grande base (3) inférieure du corps creux (2) et dont la surface est distinguée dans deux surfaces d'extrémité concaves identiques (4C) encadrant une surface convexe centrale (4D).

7. Plaque de base pour le bridage de conduits selon la revendication 6, **caractérisée en ce que** lesdits moyens de positionnement extérieurs (10) pour le positionnement dudit corps creux (2) par rapport à une ligne d'emplacement (24) de celui-ci, sont formés par une série de nervures verticales (25) situées centralement sur ladite surface convexe centrale (4D) des zones inférieures (4B) des faces latérales (4) du corps creux (2).

8. Plaque de base pour le bridage de conduits selon les revendications 3 et 1, **caractérisée en ce que** le niveau desdites rainures ouvertes (28) est égal à la hauteur desdites pattes d'ajustement (16), de manière à conférer un support de guidage double pour l'enfilage des colliers de serrage.
